# EUROPEAN PATENT SPECIFICATION

(11) **EP 2 809 472 B1**
(45) Date of publication and mention of the grant of the patent: **03.07.2019**
(21) Application number: 13743664.8
(22) Date of filing: 30.01.2013
(51) Int. Cl.: B23K 9/095, B23K 9/12, B23K 9/23

(54) **METHOD FOR ADJUSTING THE WELDING PARAMETERS OF A WELDING DEVICE**
VERFAHREN ZUR EINSTELLUNG DER SCHWEISSPARAMETER EINER SCHWEISSMASCHINE
PROCÉDÉ DE RÉGLAGE DES PARAMÈTRES DE SOUDAGE D'UN DISPOSITIF DE SOUDAGE

(30) Priority: 31.01.2012 FI 20125100
(43) Date of publication of application: 10.12.2014
(73) Proprietor: Kemppi Oy, 15800 Lahti (FI)
(72) Inventor: TÖRÖLÄ, Mikko, FI-15230 Lahti (FI); KORHONEN, Petri, FI-15110 Lahti (FI); ISO-MARKKU, Severi, FI-03850 Pusula (FI); MARTIKAINEN, Jukka, FI-53830 Lappeenranta (FI)
(74) Representative: Boco IP Oy Ab
(86) International application number: PCT/FI2013/050097
(87) International publication number: WO 2013/113993

(56) References cited:
- DD-A1- 142 677
- JP-A- S5 285 043
- JP-A- S5 750 280
- JP-A- S56 105 887
- JP-A- 2001 293 570
- US-A- 4 375 026
- US-A- 4 555 614
- US-A- 4 817 020
- US-A1- 2009 184 098
- US-A1- 2012 012 559
- SEVERI ISO-MARKKU: 'Hitsausvirtalähteen ohjaus lämmöntuonnin ja jatkuvan jäähtymisen s-käyrän perusteella' MASTER'S THESIS. LAPPEENRANTA UNIVERSITY OF TECHNOLOGY, FACULTY OF TECHNOLOGY, MECHANICAL ENGINEERING, WELDING TECHNOLOGY 10 February 2012, pages 1 - 110, XP055080575

## Description

The object of the invention is a method for adjusting the welding parameters of a welding device, according to the preamble of Claim 1.

It is well known that the quality of a welding joint is influenced by the metallurgical structure of the welding joint, achieved in the welding. The metallurgical structure is influenced by the amount of heat input to the welding joint during welding and the subsequent cooling behaviour of the material. By the heat input, Q, in this context, is meant the amount of heat per unit length of welding joint being transferred to the item to be welded. All of the produced amount of heat is not transferred to the weld, but part of it is lost as waste to the environment. For each material, upper and lower limits have been set for the heat input. If the upper limit is exceeded, the consequence will be a softening of the material, whereas, if the lower limit is not reached, the consequence will be an increase of hardness. In this context, a welding joint means a seam formed as two pieces are joined, including molten basic material of the pieces and additional material possibly introduced during welding.

Known from the publication US 2009184098, is measuring, during the welding, of thermal energy brought to the welding workpiece, as well as the use of the measured value for monitoring the quality of the welding. In the publication, complex waveforms are divided into sampling intervals during which the momentary heat amount is calculated and the propagation distance is measured. The produced heat amount per unit length is obtained by adding these. The sampling rate is set to a level required by each process, as high as possible. The measured energy is compared to reference values given by the manufacturer, and the user is given alarm information in case of deviations.

A problem in the prior art is that separate actions are still required of the user for adjusting mechanical and electrical values of the welding device in order to achieve the correct quality level. There are several welding parameters to be adjusted in welding, and there is no direct connection, visible to the user, between each welding parameter and the heat input.

### Brief description of the invention

The objective of the invention is to solve the problems mentioned above.

The objective of the invention is achieved by the method for adjusting the welding parameters of a welding device, according to the independent Claim 1.

Preferable embodiments of the invention are presented in the dependent claims.

In the method for adjusting the welding parameters, according to the invention, the user predefines a desired cooling behaviour for the welding joint, on the basis of which the welding device adjusts the welding parameters, such as the wire feed speed, the welding current and/or the welding voltage, for the start of the welding, and, if necessary, also will adjust them during welding. The user describes the desired cooling behaviour of the welding joint by means of the variables cooling time t or heat input Qₛₑₜ per unit length, the values of which are given as input to the welding device. The user can also let the welding device itself define the desired cooling behaviour of the welding joint on the basis of information about the material to be welded, given by the user, and experimental data stored in advance in the welding device. Thus, the user provides the welding device with material information about the material to be welded, which is composed of, at least, the material, the shape of the welding joint and the thickness of the material, and then the welding device will calculate and adjust the welding parameters based on this information, such that the desired cooling behaviour of the welding joint is achieved. General knowledge is that there is a direct connection between the cooling behaviour of the welding joint and the metallurgical structure created in the welding joint. Thus, a desired metallurgical structure of the welding joint is the goal aimed at by means of a certain cooling behaviour. In this connection, by the welding joint is meant both a weld beam to be created or having been created in welding and the immediate surroundings of the weld beam, influenced by the welding.

Thus, the method, according to the invention, for adjusting the welding parameters of a welding device comprises the steps, in which the desired cooling behaviour of the welding joint is being predefined, information concerning the desired cooling behaviour of the welding joint is given to the welding device by giving to the welding device the cooling time t, the amount of heat supplied Qₛₑₜ, or material information about the material to be welded, after which the welding device, based on the given information and on preliminary information previously given to the welding device, determines and adjusts the values of the welding parameters to be used in welding in order to achieve the desired cooling behaviour of the welding joint, and that the welding device either determines the actual heat input Q_{act} during welding and, by adjusting at least one welding parameter, sets the actual heat input Q_{act} to correspond, within the adjustment range, to the amount of heat input Qₛₑₜ, determined through the cooling time t or the material information, or to the given amount of heat input Qₛₑₜ, or that the welding device, based on the heat input Qₛₑₜ, the measured or given travel speed V of the welding gun and the thermal efficiency factor k, calculates and monitors the power guide value Pₛₑₜ, calculates and monitors the actual power P_{act} and sets, by adjusting at least one welding parameter, the actual power P_{act} to correspond, within the adjustment range, to the reference power value Pₛₑₜ. Preferably, additionally, information is given to the welding device about the material thickness of the material to be welded and of the type of joint of the welding joint for determining the heat input Qₛₑₜ on the basis of the given cooling time t or the material information.

In the adjustment manner of a first embodiment of the invention, the user of the welding device provides the welding device with the cooling time information, which is described by means of the variable cooling time t. The cooling time is preferably the cooling time t_{8/5}, which means the elapsed time in seconds for the material in continuous cooling to pass the temperature interval 800 - 500 °C. The connection between the cooling time t_{8/5} and the metallurgical structure of the welding joint is illustrated by means of S-graphs of the continuous cooling, which graphs convey, for example, the break-up of austenite as a function of time in continuous cooling of steel. In the S-graphs of continuous cooling, the micro-structure created in the modification zone and its hardness can be seen for various cooling rates. By means of the S-graphs, the user can choose an appropriate cooling time t_{8/5} or the cooling time can be given to the user in welding instructions or information coming with the workpiece. For example, information about optimal cooling times or heat inputs Qₛₑₜ for each material is stored or otherwise arranged in the welding device, and the welding device selects an optimal cooling time or an optimal heat input for the material to be welded based on either the material information given by the user or material information found on the material to be welded. For example an RFID reader, a barcode reader or some equivalent device can be used for reading the information on the workpiece. In other words, the material information is being read by means of an RFID reader, a barcode reader or some other equivalent reader. Then, the user of the welding device provides the welding device with information about the cooling time, and the welding device calculates a guide value for the amount of heat input Qₛₑₜ, i.e. the optimal heat input, based on the given cooling time, the given type of joint and material thickness and the working temperature. In the calculations, generally known formulae are utilized. Alternatively, instead of calculations, experimentally compiled tables stored in the welding device can be used, from which tables a value will be looked up for the heat input Qₛₑₜ corresponding to the cooling time given by the user, based on the type of joint and the material thickness. In other words, information stored or otherwise arranged in the welding device concerning the optimal heat input Qₛₑₜ for each material has been produced experimentally for each material and for each type of joint and each material thickness. Based on the calculated heat input Qₛₑₜ or the one obtained through table look-up, a constant factor k, and the travel speed V of the welding gun, the welding device calculates a power guide value Pₛₑₜ, i.e. the optimal power being aimed at in order to achieve an appropriate cooling behaviour. In MIG or MAG processes, the welding device selects, according to the calculated power reference value Pₛₑₜ, based on preliminary information given to the welding device in advance and, particularly, on the synergy graph, a power Pₖ corresponding to the calculated power Pₛₑₜ, by means of which power Pₖ the welding device can define the wire feed speed and the electrical parameters to be used in welding. Thus, the power Pₖ is based on the given information and, particularly, on the synergy graph, being a so called tabulated power. According to a preferable embodiment, the welding device calculates the power guide value Pₛₑₜ based on the heat input Qₛₑₜ, the measured or given travel speed V of the welding device, and the thermal efficiency factor k, selects the point on the synergy graph, which is provided in advance in the welding device, according to the power value Pₖ, which is predefined for the synergy graph, corresponding to the calculated power Pₛₑₜ and the predefined values for the wire feed speed and the voltage, corresponding to the point on the graph, and performs the welding using the selected wire feed speed and voltage.

At least one adjustable welding parameter is the travel speed V of the welding gun. The travel speed V of the welding gun is being monitored or measured. The power guide value Pₛₑₜ is being calculated at certain intervals. Preferably, the calculation of the power guide value Pₛₑₜ is performed every 10 ms - 1 s. As the travel speed V changes, the result of the calculation, the power reference value Pₛₑₜ, will change causing a correction to the wire feed speed selected from the synergy graph and to the selection of synergy point. In other words, as the travel speed V of the welding gun changes, the welding device will select the point on the synergy graph, predefined in the welding device, according to the power value Pₖ, which is predefined for the synergy graph, corresponding to the calculated power Pₛₑₜ, and the predefined values for the wire feed speed, corresponding to the point on the graph. In addition, all the time during welding, the momentary power P_{act} is being adjusted adaptively by means of the electrical parameters, such that it will implement the guide value Pₛₑₜ within the desired adjustment range. In this manner, the actual heat input Q_{act} remains the same as the optimal heat input Qₛₑₜ, within the adjustment range, all the time during welding. In other words, the welding device measures the momentary power value P_{act} during welding, and, when the momentary value differs from the power guide value Pₛₑₜ, the welding device adjusts the electrical welding parameters such that the measured momentary power value P_{act} will correspond to the target power Pₛₑₜ. In every welding process, the welding parameter, or the set of welding parameters, most appropriate for said welding process will be adjusted in order to keep the power P_{act} at the desired level. In certain applications, the most adequate way is to let the power P_{act} vary freely and adjust the heat input Qₛₑₜ by changing the travel speed V. In case of a TIG process, the welding device, based on the cooling time given by the user, calculates the optimal heat input Qₛₑₜ and the optimal power Pₛₑₜ and adjusts the momentary power P_{act}. As the travel speed V of the welding gun changes, the welding device adjusts the welding parameters keeping the heat input Q_{act} constant, i.e. at the same value as the optimal heat input Qₛₑₜ. Thus, this means that the welding device will adjust the welding process all the time, such that the cooling of the welding joint occurs in the desired manner. When adjusting the welding device is done based on the cooling time given by the user, the user also has to give the material thickness of the material to be welded and the type of joint of the welding joint in order to have the optimal heat input Qₛₑₜ calculated. Also the travel speed of the welding gun should be given, or the welding device can use a default travel speed for calculating the initial values.

In a second embodiment of the invention, the heat input amount per unit length Q can be used for adjusting the welding parameters of the welding device for achieving the desired cooling behaviour, instead of the cooling time and the material thickness and the information about the type of joint. Then, the user directly can announce the desired heat input amount Qₛₑₜ, i.e. the optimal heat input, or the desired heat input amount Qₛₑₜ can be read in the information supplied with the workpiece. When the heat input Qₛₑₜ initially is given to the welding device, the welding device immediately will perform the calculation of the optimal power Pₛₑₜ and thereafter will perform the opeations required for adjusting the welding parameters, i.e. it calculates or selects the initial welding parameters, such as the wire feed speed and the voltage. The welding device will repeat the calculations often enough in view of the welding process, and will adjust the process according to the changed situation. This means that the welding device adjusts the welding process all the time, such that the cooling of the welding joint occurs in the desired way. When the heat input value Qₛₑₜ is given to the welding device directly, there is no need to supply the material thickness nor the type of joint of the welding joint.

According to a preferable embodiment, the welding device calculates the power guide value Pₛₑₜ based on the heat input Qₛₑₜ, the measured or given travel speed V of the welding gun, and the thermal efficiency factor k, adjusts the the at least one welding parameter for each welding process corresponding to the power Pₛₑₜ, measures the real time travel speed V of the welding gun or receives information about the real time travel speed V of the welding gun, compares the real time travel speed V of the welding gun and the travel speed V of the welding gun used for calculating the power Pₛₑₜ, and, as the travel speed V of the welding gun changes, makes corrections to the power P_{act} again, such that the heat input Qₛₑₜ stays unchanged.

In a third embodiment of the invention, a guide table is stored in the memory of the welding device or is otherwise given to the welding device in advance, from which table the welding device reads the cooling time depending on the material information given by the user or read from the workpiece, and then the user would not make he selection himself of the cooling time for an optimal heat input Qₛₑₜ. The guide table can also contain information for each material about the optimal amounts of heat input, or the amount of heat input Qₛₑₜ can be calculated using known formulae on the basis of the cooling time t in the table. In other words, information for each material about the minimum cooling time and the maximum cooling time or the minimun heat input Q and the maximum heat input Q is stored or otherwise provided in the welding device. A prerequisite for determining the heat input is always that the material thickness and the type of joint is communicated in addition to the material information. The guide table is preferably compiled experimentally from the S-graphs given by the manufacturer taking into account the various materials and their alloys. Preferably, also compiled in the guide table, there are upper and lower limit values for the cooling time or the heat input, or a given adjustment range. In the simplest scenario, the user makes no selections, but material information is read from the workpiece by means of, for example, an RFID-reader. Based on the material information, the welding device makes a search in the guide table stored in the welding device, or otherwise given in advance, for the, for the material, most optimal heat input Qₛₑₜ or cooling time t_{8/5}, and calculates the initial welding parameters, such as the wire feed speed and the voltage. The welding device will be repeating the calculations frequently enough for the welding process and will adjust the process according to the changed situation. Thus, this means that the welding device adjusts the welding process all the time, such that the cooling of the welding joint will occur in the desired manner. When adjusting the welding device is done based on material information given by the user or on material information read from the workpiece, at least the material thickness and the type of joint should be given in addition to the material information. Also the travel speed V of the welding gun should be given, or the welding device can use a default travel speed V value as the initial value. An offset from the cooling times or the heat inputs for each material, calculated in advance into the guide table, can be set in the welding device by the user. By means of such an offset, the characteristics of the welding joint can be adjusted in a desired direction, for example to be harder or softer. The adjustment range of such an offset is +- 20 % of the value in the guide table. For example, the optimal cooling time selected by the welding device can be manually adjusted using a control on the welding device.

In the method, according to the invention, for adjusting the welding parameters during welding, the temperature of the welding joint is being measured in at least two spots at a constant distance from each other, and the welding device will calculate the actual cooling time t_{8/5} based on the measured temperatures and the travel speed V of the welding gun. The welding device compares the calculated actual cooling time and the optimal cooling time, and, based on the deviation, the welding device adjusts the wire feed speed and/or the voltage such that the actual cooling time will better correspond to the optimal cooling time.

The optimal amount of heat input Qₛₑₜ is calculated based on the given cooling time t_{8/5} for the material to be welded in the welding device. The heat input Qₛₑₜ is calculated as a function of the cooling time, the working temperature, the material thickness, and the joint shape factor, using formulae known from the litterature. For the calculation, the type of welding joint and the material thickness must be given by the user before starting. As the temperature in the calculation formula, the prevailing ambient temperature can be used, but in order to achieve a more detailed adjustment, the temperature of the workpiece can be measured, which temperature then is used for calculating the amount of heat Qₛₑₜ. When the temperature of the workpiece differs from the ambient temperature, for example due to preheating, also the temperature of the workpiece can be given to the welding device. Instead of known calculation formulae, tables, in which the most appropriate heat input, depending on the type of joint and the material thickness, corresponds to each cooling time, may have been compiled as a result of experimental work. In the tables, also the type of joint or the material thickness can be taken into account as a calculation factor for the amount of heat input in the tables. By using tables based on experimental information more accurate determination of the optimal heat input Qₛₑₜ can be achieved than by using calculation formulae. For the sake of clarity, both heat input derived by means of known calculation formulae and heat input fetched from experimental tables are hereinafter generally called heat input derived by calculation. Based on the given amount of heat input Qₛₑₜ or the amount of heat input Qₛₑₜ derived by calculation and on the travel speed V of the welding gun, the welding device calculates the optimal welding power Pₛₑₜ and, based on that, sets the correct welding parameters and adjusts the values during the welding such that the desired heat input Qₛₑₜ is upheld and the desired metallurgical structure in the welding joint is achieved through a desired cooling behaviour. Since the heat input Q can be expressed as a function of the cooling time, it is not significant which one of the variables, the heat input Q or the cooling time t, actually is used by the welding device for calculating the optimal power. The travel speed of the welding gun in relation to the workpiece can be measured or it can be received as given, for example, from a welding robot propelling the welding gun or from a conveyor. In manual welding, the travel speed is being measured, for example optically, mechanically, or by utilizing ultra-sonic waves. According to a preferable embodiment, the welding device measures the travel speed V of the welding gun in relation to the workpiece, or the welding device uses given information about the travel speed V.

According to a preferable embodiment of the invention, the optimal heat input value Qₛₑₜ calculated based on initial information or the desired heat input value obtained directly from the user, is transformed to be corresponding to the power of the welding device by multiplying the heat input by the travel speed of the weldinbg gun, and dividing by the thermal efficiency k. The factor k takes into account the energy loss transferred from the electric arc into the surrounding air, and typically it is agreed to be a constant, being, for example, 0.8 in MIG/MAG welding according to the standard SFS-EN 1011-1. In other welding processes, such as TIG or powder arc welding, a constant k defined for these processes is used. Based on the calculated power, the welding device automatically adjusts the mechanical and electrical variables taking into account the welding process being used. When the process is a known, synergically controlled MIG/MAG process, the table entry power Pₖ, corresponding to the power Pₛₑₜ acquired from the calculation, is fetched from the synergy graphs stored in the welding device. The synergy graphs constitute a widely used known control manner, in which a dependence between the wire feed speed and the voltage is created for welding with various wire materials and gases. In the control manner according to the invention, for each wire feed speed power values Pₖ have been determined in advance and added to the known synergy graphs. The selected point x on the graph, in which the power Pₖ correspondes to the value Pₛₑₜ, is used for setting the wire feed speed and the voltage. During welding, as the travel speed V of the welding gun changes, the power Pₛₑₜ is calculated, for which power the corresponding power Pₖ is located on the synergy graph, and a new wire feed speed v is obtained. All the time during welding, the actual power P_{act} is being monitored as calculated from the actual values of the current I and the voltage U, and the voltage U is being adaptively adjusted depending on the change in the actual power P_{act} compared to the power Pₛₑₜ all the time during the welding. The control manner according to the invention takes care that, regardless of changes in the travel speed V of the welding gun or in the factors affecting the voltage and the current, the welding proceeds at a certain heat input and, correspondingly, adhering to a certain cooling time, whereby the desired metallurgical structure of the welding joint is being achieved. Correspondingly, in a pulsed MIG/MAG process, the calculated power Pₛₑₜ is used in selecting the proper point on the graph, and the wire feed speed and the electrical parameters needed by the process, such as the base current, the pulse current, the pulse rate, the pulse voltage and the base voltage, are obtained from that graph point. In a TIG process, the current I to be used is being adjusted directly, based on the calculated power Pₛₑₜ, by continually measuring the actual power. The welding device can perform several of the aforementioned processes simultaneously, or in such a way that there will be simultaneously operating, for example, a MIG/MAG control manner according to prior art, based on electrical variables, and, in parallell, a TIG control manner according to the invention, based on a desired metallurgical structure. Here, the term control manner means, in effect, adjustment visible to the user, i.e. parameters, which the user should know how to determine to their appropriate values for the welding to be successful.

In adjustment based on the cooling time and/or the heat input, the welding device may use optimal values for the cooling time and/or the heat input, or, a certain variation range can be allowed. The variation range is typically +-10 % of the optimal value. In the stored table in the welding device, minimum and maximum values above and below the optimal value can be defined, constituting a so called cooling band within which one should stay in order to achieve a good metallurgical structure. In other words, the marin for adjustment between, for example, the heat input Q_{act} and the heat input guide value Qₛₑₜ is in the area of -10% - +10% of the heat input guide value Qₛₑₜ, or the margin for adjustment between the actual power P_{act} and the power guide value Pₛₑₜ is in the area of -10 % - +10 % of the power guide value Pₛₑₜ. A cooling band for various materials and alloys of them can be established experimentally. If you end up outside the set variation range, the welding device will interrupt the welding and prevent the creation of an undesired metallurgical structure in the welding joint. Preferably, the welding device adjusts the welding parameters to be used, such as the values of the wire feed speed, the welding current and voltage, such that the selected heat input guide value Qₛₑₜ is adhered to, allowing a predefined variation range, regardless of changes in the travel speed V of the welding gun.

In one method for adjusting the welding parameters of the welding device during welding, the temperature of the welding joint is measured in at least two spots of the welding joint, on the basis of which temperature the welding device determines the actual cooling time of the welding joint and compares it to the optimal cooling time for the welding joint, on the basis of which the welding device adjusts the wire feed speed and/or the electrical variables such that the actual cooling time will correspond to the optimal cooling time.

An advantage of the method according to the invention is that the welding event can be repeated in the same manner regardless of the welder, and the same metallurgical structure is achieved in the welding joint at each instance of repetition. In other words, independently of the welder or when, for example, manual welding is performed, the same metallurgical structure is always achieved regardless of the variations in travel speed of the welding gun as estimated by the welder.

### List of figures

Below, some preferable embodiments are presented in greater detail with reference to the attached figures, of which
Figure 1 shows a welding device, which can be adjusted in a manner according to the invention,
Figure 2 shows a guide table to be used in the adjustment manner according to the invention, and
Figure 3 shows, in diagram form, the adjustment manner according to the invention for adjusting the welding parameters.

### Detailed description of the invention

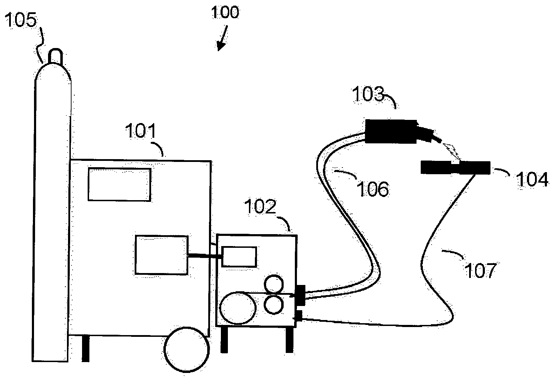

Figure 1 shows a welding device 100,' illustrating a typical MIG/MAG welding device. At number 101 in the Figure, a power source apparatus is shown, the task of which is to feed the desired welding power to the welding gun 103 through the wire feed apparatus 102 and the cabling 106. At number 105, a welding gas container is shown. The mechanism of the wire feed apparatus 102 feeds rolled up wire of additive material to the welding gun 103 at a controlled speed. The cabling 106 typically includes a current lead for feeding current to the welding gun 103, a wire guide for directing the wire of additive material to the welding gun 103, a gas conduit for directing welding gas to the welding gun 103, and water cooling hoses in case water cooling is being used, and possibly control leads and electronics needed for measuring the travel speed of the welding gun 103. From the workpiece 104, a ground cable 107 is connected back to the welding device in order to create a closed circuit for the welding current. In the welding gun 103, the welding current from the current lead is transferred to the wire of additive material, and then a welding arc is formed between the end of the wire of additive material, protruding from the welding gun 103, and the workpiece 104.

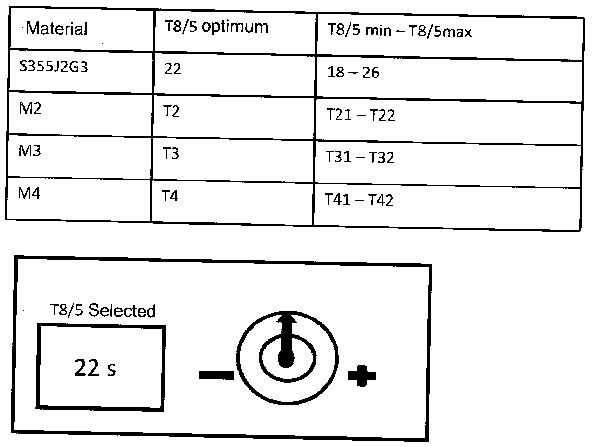

Figure 2 shows a guide table for each material, given to the welding device 100 in advance, presenting the optimal cooling time t_{8/5} for each material and minimm and maximun cooling time values, between which the cooling time may vary. The optimal cooling time entered in the table for each material preferably corresponds to a cooling time by means of which the metallurgical characteristics of the welding seam will correspond to those of the base material. The user of the welding device gives the material information to the welding device, either directly, or by reading from the workpiece, for example by means of an RFID reader, and the welding device, on the basis of the material information, makes a search in the guide table for the optimal cooling time t_{8/5}. Figure 2 also shows one example of a control on the welding device, by means of which the user of the welding device, if necessary, can adjust the optimal cooling time t_{8/5} for the material, fetched by the welding device, when the user wants the welding joint to be harder or softer than the base material.

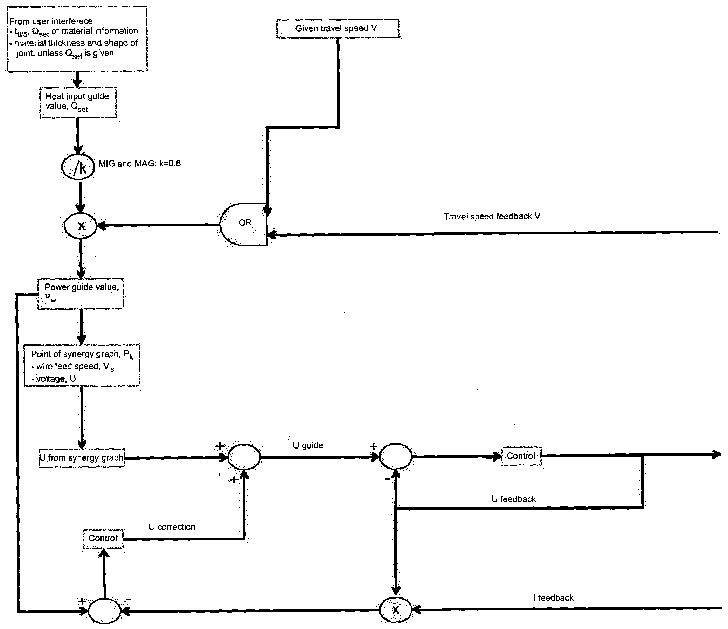

Figure 3 shows, in diagram form, a manner of adjusting the welding parameters, according to the invention. The diagram in Figure 3 is drawn for a synergic MIG process. It is possible to draw a corresponding diagram for other arc welding processes as well. The user enters necessary initial information, the cooling time or the value for heat input, material information, and the assumed travel speed. Based on those values, the optimal heat input Qₛₑₜ is calculated according to the formula presented above. Based on the optimal heat input Qₛₑₜ, the assumed travel speed, and the coefficients according to the process, the optimal power Pₛₑₜ is calculated. According to the principle presented above, the spot on the synergy graph corresponding to the power Pₖ in the table will be found on the synergy graph on the basis of the optimal power Pₛₑₜ, and, from the spot, the voltage and a guide value for the wire feed. The optimal power value Pₛₑₜ is being updated continually based on the actual travel speed. By means of the momentary values of the actual electrical variables (the current and the voltage), the actual momentary P_{act} is calculated. The value of the optimal power is compared to the value of the actual power, and the voltage guide value obtained from the synergy graph is adjusted by the amount of a term Uₖₒᵣⱼₐᵤₛ (korjaus = correction). By means of this term Uₖₒᵣⱼₐᵤₛ, the actual power P_{act} can be adjusted to correspond to the optimal power Pₛₑₜ. When the term Uₖₒᵣⱼₐᵤₛ grows too large, the welding device issues an alarm and interrupts the welding in order to prevent the creation of an undesired welding result. The voltage control shown in the diagram corresponds to an ordinary voltage control on a synergic machine.

In the method for adjusting the welding parameters of a welding device during welding, the temperature of the welding joint is determined in at least two spots on the welding joint, on the basis of which temperature the welding device 100 determines the actual cooling time of the welding joint and compares it to the optimal cooling time, based on which the welding device 100 adjusts the wire feed speed and/or the electrical variables such that the actual cooling time corresponds to the optimal cooling time.

## Claims

1. A method for adjusting the welding parameters of a welding device (100), wherein the method comprises steps, in which
a desired cooling behaviour for the welding joint is defined in advance,
information about the desired cooling behaviour of the welding joint is given to the welding device (100) by giving the cooling time t, the amount of heat input Qₛₑₜ, or material information about the material to be welded to the welding device, whereafter
based on the preliminary knowledge given in advance, the welding device (100) determines and adjusts the values of the welding parameters to be used in welding, in order to achieve the desired cooling behaviour, and
that the welding device (100) determines the actual heat input Q_{act} during welding and sets at least one welding parameter by adjusting the actual heat input Q_{act} to correspond, within the adjustment range, to the amount of heat input Qₛₑₜ defined through the cooling time t or the material information, or to the given amount of heat input Qₛₑₜ, **characterized in,**
**that** the welding device (100) calculates and monitors a power guide value Pₛₑₜ based on the heat input Qₛₑₜ, the measured or given travel speed V of the welding gun (103), and a thermal efficiency factor k, calculates and monitors the actual power P_{act}, and, by adjusting at least one welding parameter, sets the actual power P_{act} to correspond, within the adjustment range, to the power guide value Pₛₑₜ.

2. Method according to Claim 1, **characterized in, that**, additionally, information about the material thickness of the material to be welded and about the type of joint of the welding joint is given to the welding device (100) for determining the heat input Qₛₑₜ based on the given cooling time t or on the
material information.

3. Method according to Claim 1 or Claim 2, **characterized in, that** the at least one welding parameter to be adjusted is the travel speed V of the welding gun (103).

4. Method according to any one of the Claims 1 - 3, **characterized in, that** the welding device (100) measures the travel speed V of the welding gun (103) in relation to the workpiece (104) to be welded, or the welding device (100) uses given information about the travel speed V.

5. Method according to any one of the preceding claims, **characterized in, that** the welding device (100)
calculates the power guide value Pₛₑₜ based on the heat input Qₛₑₜ, the measured or given travel speed V of the welding gun (103), and the thermal efficiency factor k,
selects, on a synergy graph provided in advance in the welding device (100), a graph point on the synergy graph according to a, for the synergy graph, predefined power value Pₖ corresponding to the calculated power Pₛₑₜ, and the predefined wire feed speed and voltage values corresponding to the graph point, and
performs the welding using the selected wire feed speed and voltage.

6. Method according to Claim 5, **characterized in, that** the welding device (100) measures the actual power value P_{act} during welding, and, when the momentary value differs from the power guide value Pₛₑₜ, the welding device (100) adjusts the electrical welding parameters such that the measured momentary power value P_{act} corresponds to the target power Pₛₑₜ.

7. Method according to any one of the preceding claims, **characterized in, that** the calculation of the power guide value Pₛₑₜ preferably is performed at intervals of 10 ms - 1 s.

8. Method according to any one of the preceding claims 5 - 7, **characterized in, that** when the travel speed V of the welding gun (103) changes, the welding device (100) selects, on a synergy graph provided in advance in the welding device (100), a graph point on the synergy graph according to a, for the synergy graph, predefined power value Pₖ corresponding to the calculated power Pₛₑₜ, and the predefined wire feed speed values corresponding to the graph point.

9. Method according to any one of the preceding claims, **characterized in, that** the welding device (100)
calculates the power guide value Pₛₑₜ based on the heat input Qₛₑₜ, the measured or given travel speed V of the welding gun (103), and the thermal efficiency factor k,
adjusts at least one welding parameter, specific to the welding process, corresponding to the power Pₛₑₜ,
measures the real time travel speed V of the welding gun (103) or receives information about the real time travel speed V of the welding gun (103),
compares the real time travel speed V of the welding gun (103) with the travel speed V of the welding gun (103) used in calculating the power Pₛₑₜ, and
corrects the power P_{act} anew, when the travel speed V of the welding gun (103) changes, such that the heat input Qₛₑₜ remains unchanged.

10. Method according to any one of the preceding claims, **characterized in, that** information about optimal cooling times or heat input Qₛₑₜ for each material is stored or otherwise arranged in the welding device (100), and the welding device (100) selects the optimal cooling time or the optimal heat input Qₛₑₜ for the material to be welded based on either material information given by the user or material information found on the material to be welded.

11. Method according to any one of the preceding claims, **characterized in, that** the information about the optimal heat inputs Qₛₑₜ for each material, stored or otherwise arranged in the welding device (100), has been produced experimentally for each material and for each type of joint and material thickness.

12. Method according to any one of the preceding claims, **characterized in, that** the material information is read by means of an RFID reader, a barcode reader or some other equivalent reader.

13. Method according to any one of the preceding claims, **characterized in, that**, for each material, information about the minimum cooling time and the maximum cooling time or the minimun heat input Q and the maximum heat input Q has been stored or otherwise arranged in the welding device (100).

14. Method according to any one of the preceding claims, **characterized in, that** the optimal cooling time selected by the welding device (100) can be adjusted manually by means of a control on the welding device (100).

15. Method according to any one of the preceding claims, **characterized in, that** the welding device (100) adjusts the values of the welding parameters to be used in welding, such as the wire feed speed , the welding current and voltage, such that the selected heat input guide value Qₛₑᵣₜ is being adhered to, allowing a predefined variation range, regardless of changes in the travel speed V of the welding gun (103).

16. Method according to any one of the preceding claims, **characterized in, that** the adjustment margin between the heat input Q_{act} and the heat input guide value Qₛₑₜ is in the area of -10 % - +10 % of the heat input guide value Qₛₑₜ.

17. Method according to any one of the preceding claims, **characterized in, that** the adjustment margin between the actual power P_{act} and the power guide value Pₛₑₜ is in the area of -10 % - +10 % of the power guide value Pₛₑₜ.

## Patentansprüche

1. Verfahren zum Verstellen der Schweißparameter einer Schweißvorrichtung (100), wobei das Verfahren Schritte umfasst, in denen
ein gewünschtes Kühlverhalten für die Schweißverbindung vorab festgelegt wird,
Informationen über das gewünschte Kühlverhalten der Schweißverbindung an die Schweißvorrichtung (100) gegeben werden, indem die Kühlzeit t, die Wärmeeinbringungsmenge Qₛₑₜ oder Materialinformationen über das zu schweißende Material an die Schweißvorrichtung gegeben werden, woraufhin
die Schweißvorrichtung (100) basierend auf den vorab gegebenen vorläufigen Kenntnissen die Werte der beim Schweißen zu verwendenden Schweißparameter bestimmt und verstellt, um das gewünschte Kühlverhalten zu erzielen, und
dass die Schweißvorrichtung (100) die Ist-Wärmeeinbringung Q_{act} während des Schweißens bestimmt und mindestens einen Schweißparameter einstellt, indem sie die Ist-Wärmeeinbringung Q_{act} so verstellt, dass diese innerhalb des Verstellbereichs der durch die Kühlzeit t oder die Materialinformationen definierten Wärmeeinbringungsmenge Qₛₑₜ oder der vorgegebenen Wärmeeinbringungsmenge Qₛₑₜ entspricht, **dadurch gekennzeichnet,**
**dass** die Schweißvorrichtung (100) einen Leistungsrichtwert Pₛₑₜ basierend auf der Wärmeeinbringung Qₛₑₜ, der gemessenen oder vorgegebenen Verfahrgeschwindigkeit V der Schweißpistole (103) und einem thermischen Wirkungsgradfaktor k berechnet und überwacht, die Ist-Leistung P_{act} berechnet und überwacht und, durch Verstellen mindestens eines Schweißparameters, die Ist-Leistung P_{act} so einstellt, dass diese innerhalb des Verstellbereichs dem Leistungsrichtwert Pₛₑₜ entspricht.

2. Verfahren nach Anspruch 1, **dadurch gekennzeichnet, dass** zusätzlich Informationen über die Materialdicke des zu schweißenden Materials und über die Verbindungsart der Schweißverbindung an die Schweißvorrichtung (100) gegeben werden, um die Wärmeeinbringung Qₛₑₜ basierend auf der gegebenen Kühlzeit t oder den Materialinformationen zu bestimmen.

3. Verfahren nach Anspruch 1 oder Anspruch 2, **dadurch gekennzeichnet, dass** der mindestens eine zu verstellende Schweißparameter die Verfahrgeschwindigkeit V der Schweißpistole (103) ist.

4. Verfahren nach einem der Ansprüche 1 bis 3, **dadurch gekennzeichnet, dass** die Schweißvorrichtung (100) die Verfahrgeschwindigkeit V der Schweißpistole (103) im Verhältnis zum zu schweißenden Werkstück (104) misst oder die Schweißvorrichtung (100) vorgegebene Informationen über die Verfahrgeschwindigkeit V verwendet.

5. Verfahren nach einem der vorhergehenden Ansprüche, **dadurch gekennzeichnet, dass** die Schweißvorrichtung (100)
den Leistungsrichtwert Pₛₑₜ basierend auf der Wärmeeinbringung Qₛₑₜ, der gemessenen oder vorgegebenen Verfahrgeschwindigkeit V der Schweißpistole (103) und dem thermischen Wirkungsgradfaktor k berechnet,
an einer in der Schweißvorrichtung (100) vorab bereitgestellten Synergiekennlinie einen Kennlinienpunkt auf der Synergiekennlinie entsprechend einem für die Synergiekennlinie vordefinierten Leistungswert Pₖ, der der berechneten Leistung Pₛₑₜ entspricht, und die dem Kennlinienpunkt entsprechenden vordefinierten Drahtvorschubgeschwindigkeits- und Spannungswerte auswählt, und
das Schweißen unter Verwendung der ausgewählten Drahtvorschubgeschwindigkeit und Spannung ausführt.

6. Verfahren nach Anspruch 5, **dadurch gekennzeichnet, dass** die Schweißvorrichtung (100) den Ist-Leistungswert P_{act} während des Schweißens misst und, wenn der Momentanwert sich vom Leistungsrichtwert Pₛₑₜ unterscheidet, die Schweißvorrichtung (100) die elektrischen Schweißparameter so verstellt, dass der gemessene momentane Leistungswert P_{act} der Soll-Leistung Pₛₑₜ entspricht.

7. Verfahren nach einem der vorhergehenden Ansprüche, **dadurch gekennzeichnet, dass** die Berechnung des Leistungsrichtwertes Pₛₑₜ vorzugsweise in Intervallen von 10 ms - 1 s ausgeführt wird.

8. Verfahren nach einem der vorhergehenden Ansprüche 5 bis 7, **dadurch gekennzeichnet, dass** bei Änderung der Verfahrgeschwindigkeit V der Schweißpistole (103) die Schweißvorrichtung an einer in der Schweißvorrichtung (100) vorab bereitgestellten Synergiekennlinie einen Kennlinienpunkt auf der Synergiekennlinie entsprechend einem für die Synergiekennlinie vordefinierten Leistungswert Pₖ, der der berechneten Leistung Pₛₑₜ entspricht, und die dem Kennlinienpunkt entsprechenden vordefinierten Drahtvorschubgeschwindigkeitswerte auswählt.

9. Verfahren nach einem der vorhergehenden Ansprüche, **dadurch gekennzeichnet, dass** die Schweißvorrichtung (100)
den Leistungsrichtwert Pₛₑₜ basierend auf der Wärmeeinbringung Qₛₑₜ, der gemessenen oder vorgegebenen Verfahrgeschwindigkeit V der Schweißpistole (103) und dem thermischen Wirkungsgradfaktor k berechnet,
mindestens einen für den Schweißprozess spezifischen Schweißparameter verstellt, der der Leistung Pₛₑₜ entspricht,
die Echtzeit-Verfahrgeschwindigkeit V der Schweißpistole (103) misst oder Informationen über die Echtzeit-Verfahrgeschwindigkeit V der Schweißpistole (103) empfängt,
die Echtzeit-Verfahrgeschwindigkeit V der Schweißpistole (103) mit der bei Berechnung der Leistung Pₛₑₜ verwendeten Verfahrgeschwindigkeit V der Schweißpistole (103) vergleicht, und
bei Änderung der Verfahrgeschwindigkeit V der Schweißpistole (103) die Leistung P_{act} nachkorrigiert, so dass die Wärmeeinbringung Qₛₑₜ unverändert bleibt.

10. Verfahren nach einem der vorhergehenden Ansprüche, **dadurch gekennzeichnet, dass** Informationen über optimale Kühlzeiten oder Wärmeeinbringung Qₛₑₜ für jedes Material in der Schweißvorrichtung (100) gespeichert oder anderweitig eingerichtet werden und die Schweißvorrichtung (100), basierend auf entweder vom Benutzer gegebenen Materialinformationen oder am zu schweißenden Material vorgefundenen Materialinformationen, die optimale Kühlzeit oder die optimale Wärmeeinbringung Qₛₑₜ für das zu schweißende Material auswählt.

11. Verfahren nach einem der vorhergehenden Ansprüche, **dadurch gekennzeichnet, dass** die in der Schweißvorrichtung (100) gespeicherten oder anderweitig eingerichteten Informationen über die für jedes Material optimalen Wärmeeinbringungen Qₛₑₜ für jedes Material und für jede Verbindungsart und jede Materialdicke experimentell erzeugt wurden.

12. Verfahren nach einem der vorhergehenden Ansprüche, **dadurch gekennzeichnet, dass** die Materialinformationen über einen RFID-Leser, einen Strichcode-Leser oder einen anderen gleichwertigen Leser gelesen werden.

13. Verfahren nach einem der vorhergehenden Ansprüche, **dadurch gekennzeichnet, dass** für jedes Material Informationen über die minimale Kühlzeit und die maximale Kühlzeit oder die minimale Wärmeeinbringung Q und die maximale Wärmeeinbringung Q in der Schweißvorrichtung (100) gespeichert oder anderweitig eingerichtet wurden.

14. Verfahren nach einem der vorhergehenden Ansprüche, **dadurch gekennzeichnet, dass** die von der Schweißvorrichtung (100) ausgewählte optimale Kühlzeit mittels eines Bedienelements an der Schweißvorrichtung (100) manuell verstellt werden kann.

15. Verfahren nach einem der vorhergehenden Ansprüche, **dadurch gekennzeichnet, dass** die Schweißvorrichtung (100) die Werte der beim Schweißen zu verwendenden Schweißparameter, wie Drahtvorschubgeschwindigkeit, Schweißstrom und Schweißspannung, so verstellt, dass der ausgewählte Wärmeeinbringungsrichtwert Qₛₑₜ eingehalten wird, was einen vordefinierten Schwankungsbereich unabhängig von Änderungen der Verfahrgeschwindigkeit V der Schweißpistole (103) gestattet.

16. Verfahren nach einem der vorhergehenden Ansprüche, **dadurch gekennzeichnet, dass** die Verstellspanne zwischen der Wärmeeinbringung Q_{act} und dem Wärmeeinbringungsrichtwert Qₛₑₜ im Bereich von -10 % bis +10 % des Wärmeeinbringungsrichtwertes Qₛₑₜ liegt.

17. Verfahren nach einem der vorhergehenden Ansprüche, **dadurch gekennzeichnet, dass** die Verstellspanne zwischen der Ist-Leistung P_{act} und dem Leistungsrichtwert Pₛₑₜ im Bereich von -10 % bis +10 % des Leistungsrichtwertes Pₛₑₜ liegt.

## Revendications

1. Procédé d'ajustement des paramètres de soudage d'un appareil de soudage (100), ledit procédé comprenant les étapes dans lesquelles
un comportement de refroidissement souhaité pour la soudure est défini par avance,
on donne à l'appareil de soudage (100) des informations sur le comportement de refroidissement souhaité de la soudure en donnant à l'appareil de soudage le temps de refroidissement t, la quantité d'apport de chaleur Qₛₑₜ ou des informations sur le matériau à souder, après quoi
l'appareil de soudage (100), sur la base des connaissances préliminaires données par avance, détermine et ajuste les valeurs des paramètres de soudage à utiliser dans le soudage pour obtenir le comportement de refroidissement souhaité et
que l'appareil de soudage (100) détermine l'apport de chaleur réel Q_{act} pendant le soudage et règle au moins un paramètre de soudage en ajustant l'apport de chaleur réel Q_{act} de manière que celui-ci corresponde, à l'intérieur du domaine d'ajustement, à la quantité d'apport de chaleur Qₛₑₜ défini par le temps de refroidissement t ou les informations sur le matériau, ou à l'apport de chaleur donné Qₛₑₜ, **caractérisé en ce**
**que** l'appareil de soudage (100) calcule et surveille une valeur de puissance indicative Pₛₑₜ sur la base de l'apport de chaleur Qₛₑₜ, de la vitesse de déplacement V mesurée ou donnée du pistolet de soudage (103) et d'un facteur de rendement thermique k, calcule et surveille la puissance réelle P_{act} et, en ajustant au moins un paramètre de soudage, règle la puissance actuelle P_{act} de manière que celle-ci corresponde, à l'intérieur du domaine d'ajustement, à la valeur de puissance indicative Pₛₑₜ.

2. Procédé selon la revendication 1, **caractérisé en ce qu'**on donne à l'appareil de soudage (100), en outre, des informations sur l'épaisseur du matériau à souder et sur le type de soudure pour la détermination de l'apport de chaleur Qₛₑₜ sur la base du temps de refroidissement t donné ou des informations sur le matériau.

3. Procédé selon la revendication 1 ou la revendication 2, **caractérisé en ce que** ledit au moins un paramètre de soudage à ajuster est la vitesse de déplacement V du pistolet de soudage (103).

4. Procédé selon l'une des revendications 1 à 3, **caractérisé en ce que** l'appareil de soudage (100) mesure la vitesse de déplacement V du pistolet de soudage (103) par rapport à la pièce à souder (104) ou que l'appareil de soudage (100) utilise des informations données sur la vitesse de déplacement V.

5. Procédé selon l'une des revendications précédentes, **caractérisé en ce que** le dispositif de soudage (100)
calcule la valeur de puissance indicative Pₛₑₜ sur la base de l'apport de chaleur Qₛₑₜ, de la vitesse de déplacement V mesurée ou donnée du pistolet de soudage (103) et du facteur de rendement thermique k,
sur une courbe synergique fournie par avance dans l'appareil de soudage (100), choisit un point sur la courbe synergique selon une valeur de puissance Pₖ prédéfinie, pour la courbe synergique, correspondant à la puissance calculée Pₛₑₜ, et les valeurs prédéfinies de la vitesse d'avancement de fil et de la tension correspondant au point sur la courbe, et
réalise le soudage à l'aide de la vitesse d'avancement de fil et tension choisies.

6. Procédé selon la revendication 5, **caractérisé en ce que** l'appareil de soudage (100) mesure la valeur de puissance réelle P_{act} pendant le soudage et, lorsque la valeur instantanée est différente de la valeur de puissance indicative Pₛₑₜ, l'appareil de soudage (100) ajuste les paramètres de soudage électriques de manière que la valeur de puissance instantanée P_{act} mesurée corresponde à la puissance de consigne Pₛₑₜ.

7. Procédé selon l'une des revendications précédentes, **caractérisé en ce que** le calcul de la valeur de puissance indicative Pₛₑₜ est préférablement effectué à des intervalles de 10 ms à 1 s.

8. Procédé selon l'une des revendications précédentes 5 à 7, **caractérisé en ce que**, lorsque la vitesse de déplacement V du pistolet de soudage (103) change, l'appareil de soudage (100), sur une courbe synergique fournie par avance dans l'appareil de soudage (100), choisit un point sur la courbe synergique selon une valeur de puissance Pₖ prédéfinie, pour le graphe de synergie, correspondant à la puissance calculée Pₛₑₜ, et les valeurs prédéfinies de la vitesse d'avancement de fil correspondant au point sur la courbe.

9. Procédé selon l'une des revendications précédentes, **caractérisé en ce que** le dispositif de soudage (100)
calcule la valeur de puissance indicative Pₛₑₜ sur la base de l'apport de chaleur Qₛₑₜ, de la vitesse de déplacement V mesurée ou donnée du pistolet de soudage (103) et du facteur de rendement thermique k,
ajuste au moins un paramètre de soudage, spécifique au procédé de soudage, qui correspond à la puissance Pₛₑₜ,
mesure la vitesse de déplacement V en temps réel du pistolet de soudage (103) ou reçoit des informations sur la vitesse de déplacement V en temps réel du pistolet de soudage (103),
compare la vitesse de déplacement V en temps réel du pistolet de soudage (103) avec la vitesse de déplacement V du pistolet de soudage (103) utilisée pour calculer la puissance Pₛₑₜ, et
corrige la puissance P_{act} de nouveau, lorsque la vitesse de déplacement V du pistolet de soudage (103) change, de manière que l'apport de chaleur Qₛₑₜ demeure inchangé.

10. Procédé selon l'une des revendications précédentes, **caractérisé en ce que** des informations sur les temps de refroidissement ou l'apport de chaleur Qₛₑₜ optimaux pour chaque matériau sont enregistrées ou autrement disposées dans l'appareil de soudage (100), et l'appareil de soudage (100) choisit le temps de refroidissement optimal ou l'apport de chaleur Qₛₑₜ optimal pour le matériau à souder sur le base soit d'informations sur le matériau données par l'utilisateur soit d'informations sur le matériau trouvées sur le matériau à souder.

11. Procédé selon l'une des revendications précédentes, **caractérisé en ce que** les informations sur les apports de chaleurs Qₛₑₜ optimaux pour chaque matériau, enregistrées ou autrement disposées dans l'appareil de soudage (100), ont été produites expérimentalement pour chaque matériau et pour chaque type de soudure et épaisseur de matériau.

12. Procédé selon l'une des revendications précédentes, **caractérisé en ce que** les informations sur le matériau sont lues au moyen d'un lecteur RFID, d'un lecteur de code de barre ou d'un autre lecteur équivalent.

13. Procédé selon l'une des revendications précédentes, **caractérisé en ce que**, pour chaque matériau, des informations sur le temps de refroidissement minimum et le temps de refroidissement maximum ou l'apport de chaleur Q minimum et l'apport de chaleur Q maximum ont été enregistrées ou autrement disposées dans l'appareil de soudage (100).

14. Procédé selon l'une des revendications précédentes, **caractérisé en ce que** le temps de refroidissement optimal choisi par l'appareil de soudage (100) peut être ajusté manuellement au moyen d'un élément de commande sur l'appareil de soudage (100).

15. Procédé selon l'une des revendications précédentes, **caractérisé en ce que** l'appareil de soudage (100) ajuste les valeurs des paramètres de soudage à utiliser dans le soudage, telle que la vitesse d'avancement du fil, le courant et la tension de soudage, de manière que la valeur d'apport de chaleur indicative Qₛₑₜ choisie soit respectée, ce qui autorise une gamme de variation prédéfinie, indépendamment de changements dans la vitesse de déplacement V du pistolet de soudage (103).

16. Procédé selon l'une des revendications précédentes, **caractérisé en ce que** la marge d'ajustement entre l'apport de chaleur Q_{act} et la valeur d'apport de chaleur indicative Qₛₑₜ est comprise dans la fourchette de -10% à +10% de la valeur d'apport de chaleur indicative Qₛₑₜ.

17. Procédé selon l'une des revendications précédentes, **caractérisé en ce que** la marge d'ajustement entre la puissance réelle P_{act} et la valeur de puissance indicative Pₛₑₜ est comprise dans la fourchette de -10% à +10% de la valeur de puissance indicative Pₛₑₜ.
